# FASCICULE DE BREVET EUROPEEN

(11) **EP 1 693 283 B1**
(45) Date de publication et mention de la délivrance du brevet: **23.01.2008**
(21) Numéro de dépôt: 06300150.7
(22) Date de dépôt: 20.02.2006
(51) Int. Cl.: B62D 25/08, B62D 21/15

(54) **Structure avant de véhicule automobile**
Vorderbau für ein Kraftfahrzeug
Front structure for a motor vehicle

(30) Priorité: 21.02.2005 FR 0550468
(43) Date de publication de la demande: 23.08.2006
(73) Titulaire: RENAULT S.A.S., 92100 Boulogne Billancourt (FR)
(72) Inventeur: Juventin, Anne Claire, 29000, Quimper (FR); Chauvaux, François, 78330, Fontenay Le Fleury (FR)

(56) Documents cités:
- EP-A- 1 332 949
- US-A- 6 109 654
- US-B1- 6 382 709

## Description

La présente invention concerne une structure avant de véhicule automobile, et plus particulièrement une structure comprenant deux longerons s'étendant sensiblement longitudinalement vers l'avant du véhicule et formant une première voie haute d'absorption d'efforts, l'extrémité avant de ces longerons étant reliées par l'intermédiaire de pendeloque à un cadre additionnel disposé en dessous des longerons et formant une deuxième voie basse d'absorption d'efforts.

De façon conventionnelle, voir par exemple le document US-A-6109654, qui est en accord avec le préambule de la revendication 1, la pendeloque est formée d'un montant vertical boulonné sur le longeron et sur la voie basse, et présente une plaque de fermeture située en avant des longerons. Un inconvénient de ce mode de réalisation est que les liaisons boulonnées sont trop sollicitées dans le cas de chocs frontaux.

Il convient aussi de noter que cette pendeloque s'étend dans une zone du véhicule dans laquelle de nombreux éléments techniques de la face avant doivent être implantés.

L'objectif de l'invention est donc de proposer d'une part une pendeloque s'étendant entre les deux voies d'absorption qui soit peu fragile, et qui permette un agencement optimisé de l'architecture de la structure avant.

En réponse à des objectifs que l'on retrouve invariablement chez les différents constructeurs automobiles, la présente invention se veut également peu coûteuse et peu encombrante.

Pour répondre à ces objectifs, l'invention propose une structure tel que décrite précédemment, caractérisé en ce que la pendeloque est formée d'une part d'un renfort de pendeloque disposé entre le longeron et le cadre additionnel, et d'autre part d'une platine de fermeture disposée devant les extrémités avant du longeron et du cadre additionnel et qui s'étend sur toute la hauteur séparant le longeron du cadre additionnel.

Selon différentes caractéristiques de la présente invention :
- le renfort est soudé sur le longeron et sur le cadre additionnel.
- le renfort est formé d'une plaque sensiblement verticale soudée sur les parois latérales extérieures du longeron et du cadre additionnel, et d'un élément de rigidification solidaire de la plaque qui s'étend perpendiculairement à cette plaque sur sensiblement la largeur du longeron.
- la platine de fermeture présente une première face transversale et verticale qui est solidaire de l'extrémité avant du longeron, de l'extrémité avant du cadre additionnel, et de la plaque formant partie du renfort de pendeloque.
- la platine de fermeture présente une deuxième face verticale et longitudinale qui vient recouvrir les parois latérales intérieures des longerons et du cadre additionnel et qui est solidarisée à l'extrémité transversale de l'élément de rigidification opposée à la plaque.
- une patte de fixation prolonge verticalement cette deuxième face, de sorte que la face avant technique du véhicule est fixée sur cette deuxième face.
- la première face est prolongée pour être solidarisée à un élément de structure portant l'aile du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique vue de l'arrière du soubassement avant et du soubassement central d'un véhicule intégrant une structure avant selon l'invention ;

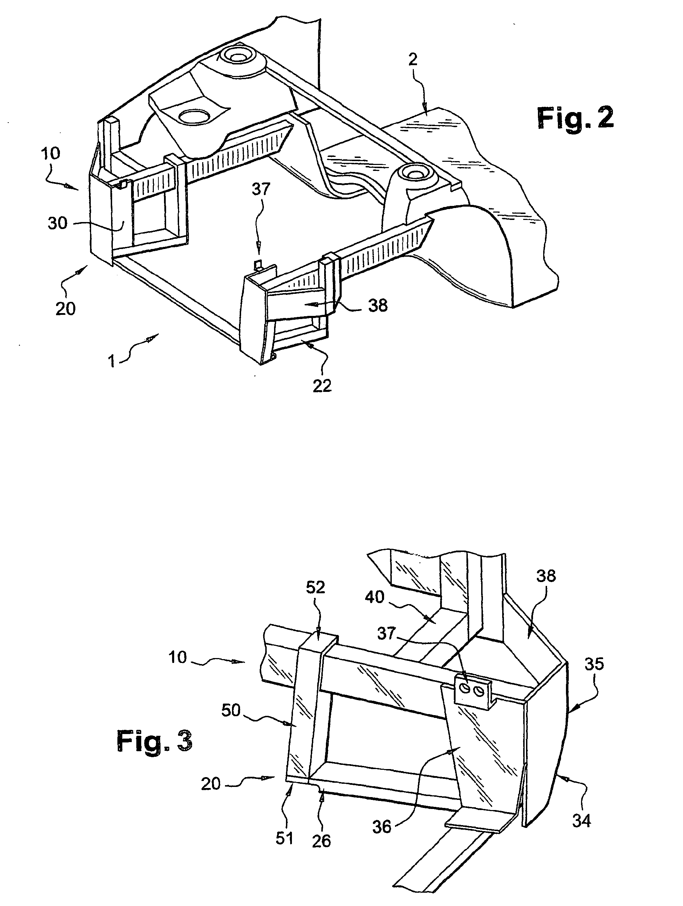

- la figure 2 est une représentation schématique conforme à la figure 1, vue de l'avant ;

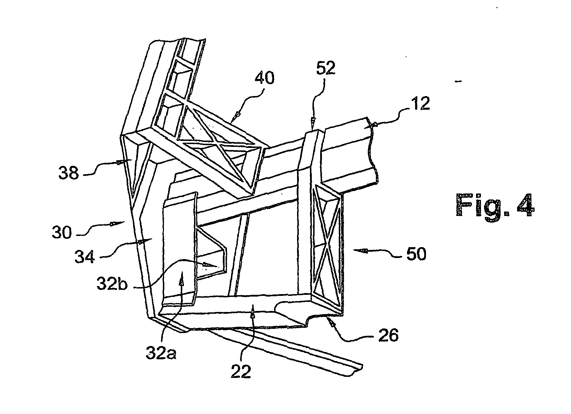

- la figure 3 est une représentation en perspective de la pendeloque selon l'invention, vue depuis l'extérieur du véhicule;
- la figure 4 est une représentation en perspective de la pendeloque de la figure 3, vue depuis l'intérieur du véhicule.

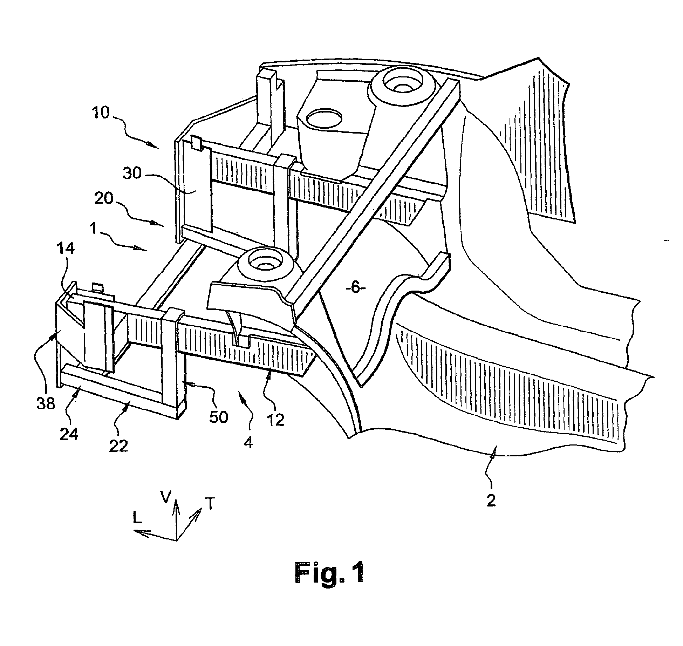

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Tel que représenté sur les figures, un véhicule automobile comprend au moins un soubassement central 2, qui correspond à la structure située sous l'habitacle, et un soubassement avant 4, qui forme la structure avant sous capot. Un tablier 6, porté par le soubassement avant 4, sépare l'habitacle de la structure avant sous capot.

La structure avant 1 du véhicule doit encaisser la totalité des efforts lors d'un choc frontal et une partie des efforts lors d'un choc latéral. La structure doit être résistante et doit pouvoir absorber un maximum d'efforts. A cet effet, la structure avant 1 comporte deux voies d'absorption d'efforts, une voie haute 10 formée essentiellement de deux longerons 12 reliés respectivement à leur extrémité avant 14 par une traverse 16, et une voie basse formée 20 d'un berceau qui porte les bras de suspension non représenté et qui est prolongé vers l'avant par un cadre additionnel 22, de sorte que l'extrémité avant 24 de ce cadre 22 soit situé sensiblement sous l'extrémité avant 14 des longerons 12.

La voie haute 10 comportant les longerons 12 forme classiquement la partie principale d'absorption d'énergie lors des chocs. Les longerons 12 sont ainsi dimensionnés pour encaisser un maximum d'efforts lors de tout type de choc, et la traverse 16 est dimensionnée pour participer à la rigidification de l'ensemble de la structure avant, et pour encaisser l'ensemble des efforts lors d'un petit choc, afin que les longerons 12 ne soient pas impactés.

Le rôle de la voie basse 20, formée par la combinaison d'un berceau et d'un cadre additionnel 22, est double. Le berceau permet le support des éléments de suspension et de direction, pendant que le cadre additionnel tient l'ensemble. Dans un souci constant d'apporter un maximum de sécurité aux occupants du véhicule, une partie de l'énergie créée lors d'un choc est dirigée vers cette voie basse 20 pour que celle-ci puisse l'absorber. A cet effet, une pendeloque 30 est disposée à l'avant du véhicule, entre l'extrémité avant 14 de chaque longeron 12 de la voie haute 10 et l'extrémité avant associée 24 du cadre additionnel 22. Cette pendeloque 30 a pour effet de répartir les efforts entre les deux voies d'absorption 10 et 20.

La pendeloque 30 est formée d'un renfort de pendeloque 32 et d'une platine emboutie de fermeture 34. Le renfort de pendeloque 32 est disposé entre un longeron 12 et le cadre additionnel 22, et est soudée à la fois à la voie haute 10 et à la voie basse 22. Ce type de réalisation permettant la soudure d'au moins une partie de la pendeloque 30 sur les voies d'absorption d'efforts présente l'avantage de générer une structure plus robuste, et d'éviter la fatigue excessive de la liaison entre le profilé formant renfort 32 et la voie basse 20. Afin de pouvoir monter l'ensemble formé par le berceau et le cadre additionnel 22, un jeu de montage est laissé entre ces deux éléments et un plot de filtrage assure la transmission d'effort en voie basse du cadre additionnel 22 vers le berceau. Or, dans le cas classique d'un boulon utilisé pour solidariser le profilé 32 aux éléments formant voie basse d'absorption, c'est ce boulon qui accuse l'ensemble de l'effort crée par le déplacement autorisé lors d'un choc du cadre additionnel 22 vers le berceau. Le fait de souder le renfort de pendeloque 32 sur les deux voies d'absorption 10 et 20 permet alors de fournir une structure avant qui soit plus solidaire et donc plus résistante.

Selon un mode de réalisation particulier de l'invention, le renfort de pendeloque 32 est formé d'une plaque sensiblement verticale 32a qui est soudée sur les parois latérales extérieures du longeron 12 et du cadre additionnel 22, ainsi que d'un élément de rigidification 32b, formant un polygone, et par exemple un trapèze, solidaire de la plaque, qui s'étend transversalement sur sensiblement la largeur du longeron 12. La platine emboutie 34, dont une première face transversale et verticale 35 est solidaire de l'extrémité avant 14 du longeron 12, de l'extrémité avant 24 du cadre additionnel 22, et de la plaque formant partie du renfort de pendeloque 32, présente une deuxième face verticale et longitudinale 36 qui vient recouvrir les faces latérales intérieures des longerons 12 et du cadre additionnel 22 et qui est solidarisé à l'extrémité transversale de l'élément de rigidification 32b du renfort de pendeloque 32.

La platine emboutie de fermeture 34 s'étend sur toute la hauteur entre les deux voies haute 10 et basse 20 pour une absorption homogène des efforts. La platine 34 s'étend ainsi devant la voie basse 20, et il convient de noter que ce type de disposition est également intéressante dans le cas d'une structure avec une liaison boulonnée entre le cadre additionnel 22 et la pendeloque 30. Cette disposition permet d'éviter qu'une voie d'absorption soit sollicité avant l'autre, ce qui peut provoquer l'arrachement du boulonnage. Le cadre additionnel 22 est ainsi solidarisé plus efficacement à la structure du véhicule pendant l'ensemble du choc.

Comme vu précédemment, une première face 35, sensiblement verticale et transversale, est disposée en avant des voies d'absorption d'effort, de sorte qu'elle permette de répartir au mieux les efforts à encaisser. Cette première face 35 offre également une zone de fixation d'une traverse 16 reliant les extrémités avant 14 de chaque longeron 12. Une deuxième face 36, sensiblement verticale et longitudinale, est disposée en arrière de cette première face 35 et est solidaire du longeron 12 et des éléments du cadre additionnel 22, cette deuxième face 36 ayant pour objectif de rigidifier la première face 35. Une patte de fixation 37 prolonge verticalement cette deuxième face 36, de sorte que la face avant technique du véhicule, sur laquelle est montée à titre d'exemple les optiques, est fixée sur cette deuxième face 36. A l'opposé de cette deuxième face 36, la première face 35 se prolonge sur le côté extérieur pour être solidarisé à un élément de structure latéral 7, qui à titre d'exemple peut porter une aile du véhicule. Cette extension latérale 38 présente l'avantage d'apporter une raideur transversale, et de proposer une répartition des efforts lors de chocs impactant les coins avant gauche ou droit du véhicule.

Un moyen de renfort latéral 40, avantageusement un profilé présentant la forme d'une équerre, est soudé sur le longeron 12 et s'étend latéralement vers l'élément de structure latéral 7. Ce moyen de renfort 40 est dimensionné pour que la surface de contact entre l'élément de structure latéral 7 et le moyen de renfort 40 soit suffisamment grande pour apporter la raideur nécessaire. L'élément de structure latéral 7, le moyen de renfort latéral 40 et le prolongement latéral 38 de la platine emboutie 34 forment ainsi un noeud de structure apte à favoriser l'absorption des efforts en cas de choc latéral avant. Le triangle formé par le moyen de renfort 40, la partie avant du longeron 12 et le prolongement latéral 38 permet d'optimiser la prise en charge des efforts arrivant de biais.

Un boîtier arrière de cadre additionnel 50, formé d'un profilé sensiblement vertical, avantageusement en aluminium, assure une autre liaison entre la voie haute 10 et la voie basse 20 de la structure avant 1. Le boîtier arrière de cadre additionnel 50 est soudé sur le longeron supérieur 12 et à l'extrémité arrière 26 du cadre additionnel 22, et est donc situé en regard de l'extrémité avant du berceau. La partie inférieure 51 du boîtier arrière de cadre additionnel 50 intègre le plot de filtrage sur lequel est monté l'extrémité avant du berceau, dans le but que les vibrations générées par le bloc moteur ne remontent pas vers les longerons par l'intermédiaire du berceau puis des profilés. Selon l'invention, le montage du cadre additionnel 22, du boîtier arrière de cadre additionnel 50 et du berceau se fait alors avec un jeu minime. Cette disposition présente l'avantage d'éviter ainsi la structure habituelle dans laquelle deux montants verticaux relient le cadre additionnel 22 et respectivement le berceau au longeron supérieur 12. Un tel montage implique un jeu important de montage entre le cadre additionnel 22 et le berceau, et ce jeu n'est compensé qu'en cas de choc. L'impact entre ces deux éléments de la voie basse 20, et la remontée des efforts vers la voie haute 10 qui en découle, est alors retardé, ce qui limite la quantité d'énergie pouvant être absorbée. Selon un mode de réalisation particulier de l'invention, le boîtier arrière de cadre additionnel 50 peut présenter une forme trapézoïdale de sorte qu'un plan incliné 54 monte de la voie basse 20 vers le longeron 12, le transfert des efforts vers la voie haute 10 étant alors optimisé.

Selon un mode de réalisation particulier, au moins un longeron 12 de la voie haute 10 est coupé en deux et la partie supérieure 52 de ce boîtier arrière de cadre additionnel 50 assure alors la liaison entre les parties du longeron. Le fait de présenter un longeron 12 en deux parties est intéressant d'une part en terme de montage et de démontage après vente, car certains chocs à faible vitesse peuvent ne nécessiter qu'un remplacement de la partie avant du longeron, et d'autre part en terme d'optimisation de l'absorption d'efforts le long de ce longeron 12, la partie arrière du longeron 12 pouvant alors être aisément surdimensionné par rapport à la partie avant pour absorber les efforts remontant de la voie basse 20 par le boîtier arrière de cadre additionnel 50. Ce boîtier permet alors un transfert d'efforts entre la voie basse et la voie haute, tout en assurant la jonction entre les deux parties du longeron, sans nécessiter de pièce supplémentaire jouant le rôle unique de manchon liant ces deux parties.

L'invention n'est nullement limitée au mode de réalisation décrit et illustré qui n'a été donné qu'à titre d'exemple.

## Revendications

1. Structure avant de véhicule automobile, comprenant au moins un longeron (12) s'étendant sensiblement longitudinalement vers l'avant du véhicule et formant une première voie d'absorption d'efforts (10), l'extrémité avant (14) de ce au moins un longeron (12) étant reliée par l'intermédiaire d'une pendeloque (30) à un cadre additionnel (22) disposé en dessous du au moins un longeron (12) et formant une deuxième voie d'absorption d'efforts (20), **caractérisée en ce que** la pendeloque (30) est formée d'une part d'un renfort de pendeloque (32) disposé entre le longeron (12) et le cadre additionnel (22), et d'autre part d'une platine de fermeture (34) disposée devant les extrémités avant (14, 24) du longeron (12) et du cadre additionnel (22) et qui s'étend sur toute la hauteur séparant le longeron (12) du cadre additionnel (22).

2. Structure avant selon la revendication 1, **caractérisée en ce que** le renfort (32) est soudé sur le longeron (12) et sur le cadre additionnel (22).

3. Structure avant selon la revendication 1 ou 2, **caractérisée en ce que** le renfort (32) est formé d'une plaque (32a) sensiblement verticale soudée sur les parois latérales extérieures du longeron (12) et du cadre additionnel (22), et d'un élément de rigidification (32b) solidaire de la plaque (32a) et qui s'étend perpendiculairement à cette plaque (32a) sur sensiblement la largeur du longeron (12).

4. Structure avant selon la revendication précédente, **caractérisée en ce que** la platine de fermeture (34) présente une première face transversale et verticale (35) qui est solidaire de l'extrémité avant (14) du longeron (12), de l'extrémité avant (24) du cadre additionnel (22), et de la plaque (32a) formant partie du renfort de pendeloque (32).

5. Structure avant selon la revendication précédente, **caractérisée en ce que** la platine de fermeture (34) présente une deuxième face verticale et longitudinale (36) qui vient recouvrir les parois latérales intérieures des longerons (12) et du cadre additionnel (22) et qui est solidarisé à l'extrémité transversale de l'élément de rigidification (32b) opposée à la plaque (32a).

6. Structure avant selon la revendication 5, **caractérisée en ce qu**'une patte de fixation (37) prolonge verticalement la deuxième face (36), de sorte que la face avant technique du véhicule est fixée sur cette deuxième face (36).

7. Structure avant selon l'une des revendications 4 à 6, **caractérisée en ce que** la première face (35) est prolongée pour être solidarisée à un élément de structure latéral (7) du véhicule.

## Claims

1. Front structure of a motor vehicle, comprising at least one side member (12) extending substantially longitudinally towards the front of the vehicle and forming a first load-absorbing route for absorbing loads (10), the front end (14) of at least one side member (12) being connected via a vertical member (30) to an additional frame (22) positioned below at least one side member (12) and forming a load-absorbing second route for the absorption of loads (20), **characterized in that** the vertical member (30) is formed, on the one hand, from a vertical member reinforcement (32) positioned between the side member (12) and the additional frame (22), and, on the other hand, from a closure plate (34) positioned in front of the front ends (14, 24) of the side member (12) and of the additional frame (22) and that extends over the entire height separating the side member (12) from the additional frame (22).

2. Front structure according to Claim 1, **characterized in that** the reinforcement (32) is welded onto the side member (12) and onto the additional frame (22).

3. Front structure according to Claim 1 or 2, **characterized in that** the reinforcement (32) is formed from a substantially vertical plate (32a), welded onto the outer side walls of the side member (12) and of the additional frame (22), and from a stiffening element (32b) which is secured to the plate (32a) and extends perpendicularly to this plate (32a) over substantially the width of the side member (12).

4. Front structure according to the preceding claim, **characterized in that** the closure plate (34) has a transverse first vertical face (35) that is secured to the front end (14) of the structure (12), to the front end (24) of the additional frame (22) and to the plate (32a) forming part of the vertical member reinforcement (32).

5. Front structure according to the preceding claim, **characterized in that** the closure plate (34) has a longitudinal second vertical face (36) that covers the inner side walls of the side members (12) and of the additional frame (22) and that is secured to the transverse end of the stiffening element (32b) opposite the plate (32a).

6. Front structure according to claim 5, **characterized in that** a fixing lug (37) extends the second face (36) vertically, so that the technical front face of the vehicle is fixed to this second face (36).

7. Front structure according to one of Claims 4 to 6, **characterized in that** the first face (35) is extended so as to be secured to a lateral structural element (7) of the vehicle.

## Patentansprüche

1. Kraftfahrzeug-Vorderbau, mit wenigstens einem Längsträger (12), der sich im Wesentlichen longitudinal zur Vorderseite des Fahrzeugs erstreckt und einen ersten Kraftabsorptionsweg (10) bildet, wobei das vordere Ende (14) dieses wenigstens einen Längsträgers (12) über ein Gehänge (30) mit einem zusätzlichen Rahmen (22) verbunden ist, der unter dem wenigstens einen Längsträger (12) angeordnet ist und einen zweiten Kraftabsorptionsweg (20) bildet, **dadurch gekennzeichnet, dass** das Gehänge (30) einerseits aus einer zwischen dem Längsträger (12) und dem zusätzlichen Rahmen (22) angeordneten Gehängeverstärkung (32) und andererseits aus einer vor den vorderen Enden (14, 24) des Längsträgers (12) und des zusätzlichen Rahmens (22) angeordneten Verschlussplatte (34), die sich über die gesamte Höhe erstreckt, die den Längsträger (12) und den zusätzlichen Rahmen (22) trennt, gebildet ist.

2. Vorderbau nach Anspruch 1, **dadurch gekennzeichnet, dass** die Verstärkung (32) an den Längsträger (12) und an den zusätzlichen Rahmen (22) angeschweißt ist.

3. Vorderbau nach Anspruch 1 oder 2, **dadurch gekennzeichnet, dass** die Verstärkung (32) aus einer im Wesentlichen vertikalen Platte (32a), die an die äußeren Seitenwände des Längsträgers (12) und des zusätzlichen Rahmens (22) angeschweißt ist, und aus einem Versteifungselement (32b), das mit der Platte (32a) fest verbunden ist und sich senkrecht zu dieser Platte (32a) im Wesentlichen über die Breite des Längsträgers (12) erstreckt, gebildet ist.

4. Vorderbau nach dem vorhergehenden Anspruch, **dadurch gekennzeichnet, dass** die Verschlussplatte (34) eine erste transversale und vertikale Fläche (35) aufweist, die mit dem vorderen Ende (14) des Längsträgers (12), mit dem vorderen Ende des zusätzlichen Rahmens (22) und mit der einen Teil der Gehängeverstärkung (32) bildenden Platte (32a) fest verbunden ist.

5. Vorderbau nach dem vorhergehenden Anspruch, **dadurch gekennzeichnet, dass** die Verschlussplatte (34) eine zweite vertikale und longitudinale Fläche (36) aufweist, die die inneren Seitenwände des Längsträgers (12) und des zusätzlichen Rahmens (22) abdeckt und mit dem transversalen Ende des Versteifungselements (32b) gegenüber der Platte (32a) fest verbunden ist.

6. Vorderbau nach Anspruch 5, **dadurch gekennzeichnet, dass** ein Befestigungsansatz (37) die zweite Fläche (36) vertikal verlängert, derart, dass die technische Vorderseite des Fahrzeugs an dieser zweiten Fläche (36) befestigt ist.

7. Vorderbau nach einem der Ansprüche 4 bis 6, **dadurch gekennzeichnet, dass** die erste Fläche (35) verlängert ist, um mit einem seitlichen Aufbauelement (7) des Fahrzeugs fest verbunden zu werden.
